# FASCICULE DE BREVET EUROPEEN

(11) **EP 2 909 508 B1**
(45) Date de publication et mention de la délivrance du brevet: **06.12.2017**
(21) Numéro de dépôt: 13785557.3
(22) Date de dépôt: 14.10.2013
(51) Int. Cl.: F16H 9/18, F16H 55/56, F16H 63/06

(54) **VARIATEUR DE VITESSE A COURROIE**
RIEMENANTRIEB MIT VERÄNDERLICHER DREHZAHL
VARIABLE-SPEED BELT DRIVE

(30) Priorité: 18.10.2012 FR 1259917
(43) Date de publication de la demande: 26.08.2015
(73) Titulaire: France Reducteurs, 85500 Les Herbiers (FR)
(72) Inventeur: BARENDRECHT, Wouter, F-49300 Cholet (FR)
(74) Mandataire: Godineau, Valérie
(86) Numéro de dépôt international: PCT/FR2013/052449
(87) Numéro de publication internationale: WO 2014/060692

(56) Documents cités:
- FR-A- 1 102 759
- US-A- 2 987 934
- US-A- 3 362 242
- US-A1- 2006 183 582
- US-A1- 2007 026 981

## Description

La présente invention concerne un variateur de vitesse à courroie.

Elle concerne plus particulièrement un variateur de vitesse à courroie du type comprenant au moins :
- deux arbres positionnables de manière sensiblement parallèles,
- deux poulies à flasques à écartement variable, l'une menante, l'autre, menée, portées l'une, par l'un, l'autre, par l'autre desdits arbres et reliées entre elles par ladite courroie,
- un dispositif de variation de vitesse par commande en rapprochement/écartement des flasques de la poulie menante
- des moyens de rappel des flasques de ladite poulie menée en position rapprochée.

De tels variateurs de vitesse sont plus particulièrement destinés à être installés sur des engins roulants, tels des tracteurs de tonte, entre l'arbre primaire moteur de l'engin et les roues de l'engin, l'arbre primaire moteur étant apte à entrainer en rotation l'arbre porteur de la poulie menante du variateur de vitesse ou à former l'arbre porteur de la poulie menante tandis que le mouvement de l'arbre porteur de la poulie menée est transmis aux roues de l'engin. Dans de nombreux cas, l'arbre de la poulie menée du variateur de vitesse constitue donc l'arbre d'entrée d'un boîtier de transmission équipé d'un arbre de sortie d'entraînement des roues de l'engin. De nombreuses architectures de variateur sont connues à ce jour. Toutefois, pour des raisons de coût, on est à la recherche de solutions simplifiées sans nuire au fonctionnement et aux potentialités du variateur.

En particulier, toute solution, telle que celle décrite dans le document US-2.987.934, dans laquelle un dispositif automatique de variation de vitesse faisant en réalité uniquement office d'embrayage est disposé sur l'arbre porteur de la poulie menante et fonctionne par variation de la vitesse de rotation de l'arbre porteur de la poulie menante, est à exclure du fait que cet arbre porteur de la poulie menante peut, dans certaines configurations, former l'arbre primaire moteur de l'engin. Or, par exemple, dans le cas des engins de tonte, l'arbre primaire moteur de l'engin entraîne la lame de tonte et doit donc tourner à vitesse constante. Il est donc exclu d'utiliser une variation de la vitesse de rotation de cet arbre pour commander la variation de vitesse sans quoi l'opération de tonte ne serait plus garantie.

Un but de la présente invention est donc de proposer un variateur de vitesse d'architecture de base simplifiée dont la conception permet de réduire l'effort de commande à produire et de maîtriser le couple transmissible, sans nuire à la possibilité d'utiliser l'arbre porteur de la poulie menante comme arbre d'entraînement d'une lame de coupe dans le cas par exemple d'une application de variation de vitesse à un engin de coupe, tel qu'un engin de tonte.

Un autre but de la présente invention est de proposer un variateur de vitesse dont la conception permet d'éviter tout risque de coincement de la courroie entre les flasques de la poulie menée en position de vitesse maximale des flasques de la poulie menée.

Un autre but de la présente invention est de proposer un variateur de vitesse dont la conception permet de réaliser aisément un variateur de vitesse débrayable.

A cet effet, l'invention a pour objet un variateur de vitesse à courroie du type comprenant au moins :
- deux arbres positionnables de manière sensiblement parallèles,
- deux poulies à flasques à écartement variable, l'une menante, l'autre, menée, portées l'une, par l'un, l'autre, par l'autre desdits arbres et reliées entre elles par ladite courroie,
- un dispositif de variation de vitesse par commande en rapprochement/écartement des flasques de la poulie menante
- des moyens de rappel des flasques de ladite poulie menée en position rapprochée,
caractérisé en ce que le dispositif de variation de vitesse comprend des moyens de commande en rapprochement des flasques de la poulie menante à commande dite manuelle, et des moyens d'assistance à la commande en rapprochement des flasques de la poulie menante à actionnement dit automatique, ces moyens d'assistance comprenant une came formée de deux plateaux coaxiaux à rampes inclinées à contact glissant, l'un des plateaux étant solidaire en rotation du ou d'un flasque mobile de la poulie menante, l'autre plateau étant solidaire en rotation de l'arbre porteur de la poulie menante, lesdits plateaux tendant à s'écarter l'un de l'autre dans le sens d'un rapprochement des flasques de la poulie menante sous l'effet du couple transmis et en ce que les moyens de rappel des flasques de ladite poulie menée en position rapprochée sont formés par un simple ressort.

Il en résulte une conception de base simplifiée du variateur de vitesse sans nuire à la possibilité de maîtriser le couple transmissible et d'intégrer aisément un moyen de débrayage dans ledit variateur. Par ailleurs, la présence de moyens d'assistance à la commande permet de réduire l'effort de commande à produire pour la variation de vitesse.

De préférence, l'arbre de la poulie menée est équipé d'un organe fou, tel qu'un roulement, un galet ou une bague, présentant une surface périphérique externe montée libre à rotation sur ledit arbre et autour de laquelle la courroie est apte à s'enrouler au moins partiellement en position écartée des flasques de la poulie menée, correspondant à la position de plus faible diamètre d'enroulement de la courroie autour dudit arbre.

La présence d'un organe fou permet de réduire les risques de casse en aval du variateur de vitesse.

De préférence encore, l'organe fou est immobilisé axialement sur l'arbre porteur de la poulie menée.

De préférence, l'un des flasques de la poulie menée, évidé centralement pour pouvoir être enfilé sur l'arbre porteur de ladite poulie, est muni, autour de l'évidement central, d'un logement annulaire de l'organe fou, à l'état rapproché desdits flasques.

Cette disposition permet d'augmenter la course des flasques dans le sens d'un rapprochement ou d'un écartement desdits flasques.

De préférence, en position de plus faible diamètre d'enroulement de la courroie autour dudit arbre de la poulie menée, à l'état en appui de la courroie sur la surface périphérique externe de la pièce annulaire dudit organe fou, l'un des flasques de la poulie menée est monté avec jeu et déplaçable axialement le long dudit arbre porteur de la poulie menée.

Ce jeu permet d'éviter un comportement de la poulie menée similaire à celui d'une poulie à flasques fixes en position de plus faible diamètre d'enroulement de la courroie autour de l'arbre de ladite poulie.

De préférence, le flasque de la poulie menée monté avec jeu et déplaçable axialement le long dudit arbre porteur de la poulie menée, en position de plus faible diamètre d'enroulement de la courroie autour dudit arbre de la poulie menée, à l'état en appui de la courroie sur la surface périphérique externe de la pièce annulaire dudit organe fou, est le flasque chargé par ressort.

De préférence, l'un des flasques, dit fixe, de la poulie menée est réalisé d'une seule pièce avec un moyeu enfilé sur l'arbre porteur de la poulie, et monté solidaire en rotation dudit arbre, l'autre flasque, dit mobile, de la poulie menée est évidé centralement et reçu à emboitement sur ledit moyeu pour un montage libre axialement et solidaire en rotation dudit moyeu, le flasque mobile est équipé des moyens de rappel des flasques de la poulie menée en position rapprochée, lesdits flasques délimitent entre eux une gorge de dimension variable à l'intérieur de laquelle est apte à s'insérer la courroie du variateur, au moins l'un des flasques est un flasque en matière de synthèse muni, sur sa surface en regard de l'autre flasque, d'un revêtement en métal affectant la forme d'une coupelle évidée centralement, et la ou chaque coupelle est, dans sa zone jouxtant l'évidement central, séparée du flasque qu'elle revêt par un espace dit périphérique annulaire qui, en empêchant tout contact direct entre flasque et coupelle réduit, dans ladite zone, les échanges thermiques entre flasque et coupelle, à l'état assemblé de la coupelle au flasque.

Cette conception permet d'éviter un échauffement et une fusion de la matière constitutive du flasque lorsque la courroie patine. En particulier, cette conception permet une rupture de l'échange thermique entre le revêtement de métal et le flasque en matière de synthèse. En cas d'échauffement fort, cet évidement évite la détérioration du flasque de synthèse.

De préférence, le flasque mobile de la poulie menée est formé d'une platine circulaire évidée centralement, ledit évidement central étant muni d'un rebord faisant saillie, au moins d'un côté, de ladite platine, pour former un fût coaxial au moyeu de la poulie, ledit rebord étant un rebord épaulé pour ménager le logement annulaire de l'organe fou à l'état rapproché desdits flasques, les moyens de rappel du flasque mobile en direction du flasque fixe affectant la forme d'un ressort hélicoïdal enroulé autour du fût du flasque mobile.

Cette conception permet un contact matière de synthèse/matière de synthèse lorsque le fût est en matière de synthèse. Ce contact facilite un montage solidaire en rotation des flasques et un déplacement axial des flasques par rapport à un contact métal/matière de synthèse. En outre, cette conception permet la suppression d'un traitement anti-corrosion nécessaire dans le cas où le flasque mobile coulisse sur une surface métallique.

De préférence, la poulie menante dont l'un des flasques, dit fixe, est monté solidaire en rotation de l'arbre porteur de la poulie menante et dont l'autre flasque, dit mobile, est monté mobile axialement sur l'arbre porteur de la poulie menante dans le sens d'un rapprochement du flasque fixe par l'intermédiaire du dispositif de variation de vitesse est une poulie débrayable et comprend des moyens de débrayage formés d'au moins une pièce annulaire disposée entre lesdits flasques, cette pièce annulaire présentant une surface périphérique externe, montée libre à rotation par rapport à l'arbre porteur de la poulie menante, et autour de laquelle la courroie s'enroule au moins partiellement en position débrayée correspondant à la position dans laquelle les flasques sont écartés l'un de l'autre de manière à empêcher toute transmission de mouvement entre arbres porte-poulie, le flasque mobile de la poulie menante venant à recouvrement de la pièce annulaire au cours du rapprochement des flasques de ladite poulie pour permettre l'enroulement de la courroie à l'intérieur de la gorge ménagée par les flasques et autoriser le passage du variateur de vitesse en position embrayée, la poursuite du rapprochement des flasques de la poulie menante assurant la variation à volonté de la vitesse.

La conception de base simplifiée du variateur permet donc l'intégration aisée d'un moyen de débrayage sur la poulie menante commandée.

De préférence encore, la poulie menante est équipée de moyens élastiques de rappel de ses flasques en position écartée l'un de l'autre.

De préférence, les moyens de commande en rapprochement des flasques de la poulie menante à commande manuelle comprennent un organe de commande couplable à un levier, une manette ou une pédale actionnable par la main ou le pied de l'opérateur.

De préférence, la poulie menante étant du type dont l'un des flasques dit mobile est monté mobile axialement sur l'arbre porteur de la poulie menante dans le sens d'un rapprochement de l'autre flasque de la poulie, l'organe de commande des moyens de commande en rapprochement des flasques de la poulie menante à commande manuelle est actif par poussée directe ou indirecte sur ledit flasque.

De préférence, lorsque l'organe de commande des moyens de commande en rapprochement des flasques de la poulie menante est actif sur ledit flasque mobile de la poulie menante par poussée indirecte, ledit organe de commande est actif par poussée via une pièce en forme de cloche enfilée sur l'arbre porteur de la poulie menante et monté solidaire en rotation dudit flasque mobile, cette cloche étant munie à son sommet d'un roulement sur lequel l'organe de commande est apte à agir.

L'invention a encore pour objet un engin roulant comprenant un arbre primaire moteur, des roues et un variateur de vitesse disposé entre l'arbre primaire moteur et les roues, ledit engin étant caractérisé en ce que le variateur de vitesse est du type précité.

L'invention sera bien comprise à la lecture de la description suivante d'exemples de réalisation, en référence aux dessins annexés dans lesquels :

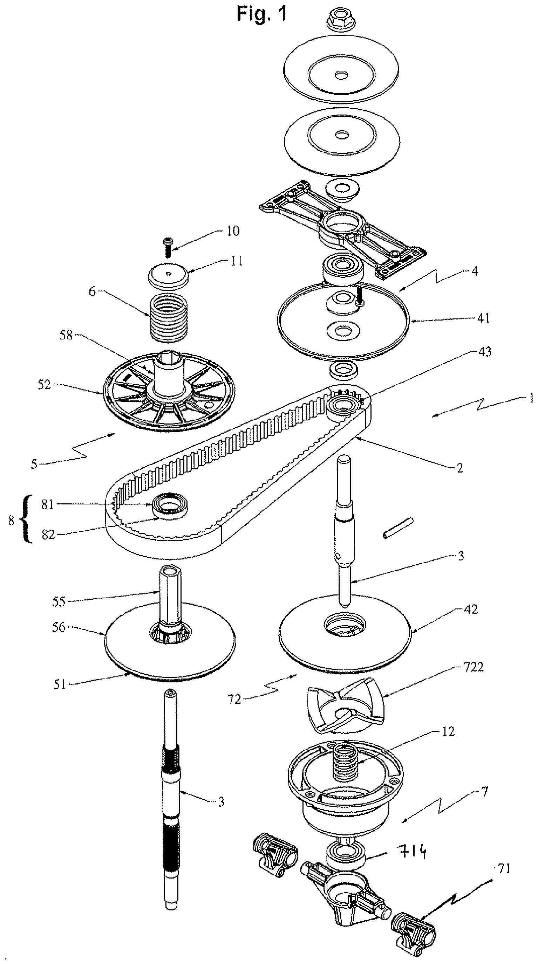

la figure 1 représente une vue en position éclatée des éléments du variateur ;

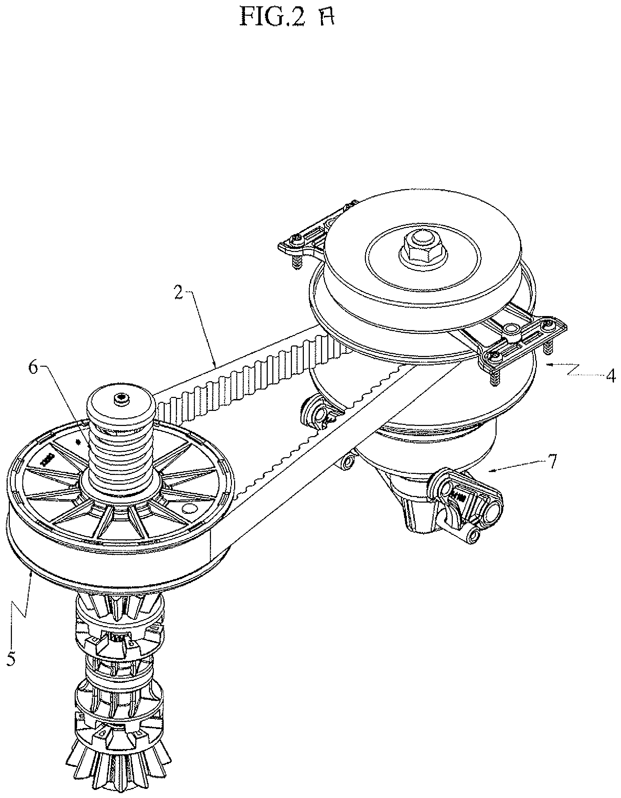

la figure 2A représente une vue en position assemblée des éléments du variateur ;

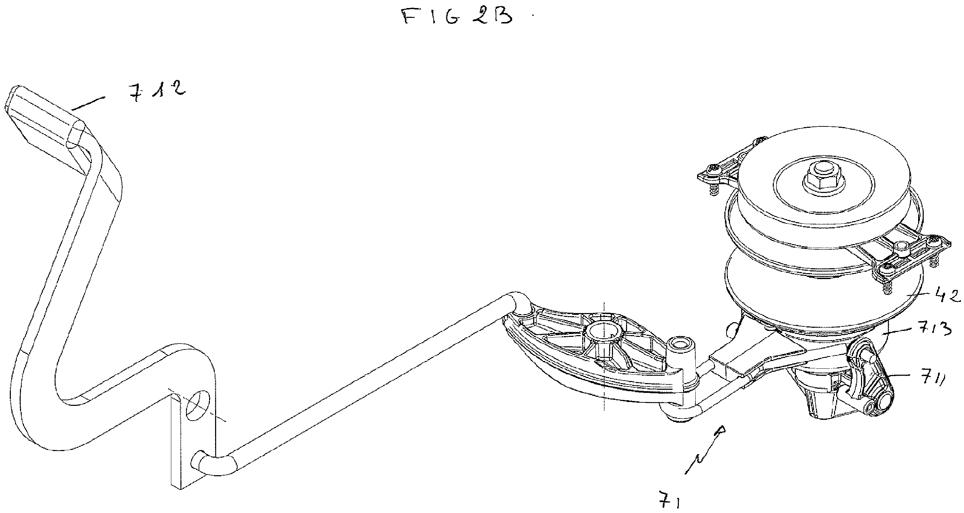

la figure 2B représente une vue en perspective de la poulie menante et des moyens de commande en rapprochement des flasques de ladite poulie ;
les figures 3 à 6 représentent des vues en coupe du variateur en position débrayée (figure 3), en position vitesse minimale (figure 4), en position vitesse maximale (figure 5) et en position d'appui sur l'organe fou (figure 6).

Comme mentionné ci-dessus, le variateur 1 de vitesse comprend deux poulies 4, 5 à flasques à écartement variable reliées entre elles par une courroie 2 s'insérant à l'intérieur de la gorge de chacune des poulies. L'une des poulies est appelée poulie menante du variateur et représentée en 4 aux figures. L'autre poulie est appelée poulie menée et est représentée en 5 aux figures. Ces poulies sont chacune portées par un arbre 3. Les flasques des poulies sont évidés centralement pour pouvoir être enfilés sur l'arbre et sont généralement de forme tronconique pour former entre eux une gorge en V de réception de courroie. Un tel variateur peut être installé sur un engin à conducteur marchant, tel qu'une tondeuse à gazon, ou à conducteur embarqué, tel qu'un tracteur, notamment un tracteur de tonte. L'arbre porteur de la poulie menante, qui est un arbre rotatif apte à être entraîné en rotation, peut être formé par l'arbre primaire moteur de l'engin ou porter une poulie supplémentaire reliée par une transmission sans fin à courroie à une poulie portée par l'arbre primaire moteur pour permettre la transmission du mouvement de l'arbre primaire moteur à l'arbre porteur de la poulie menante. Cet arbre porteur de la poulie menante est entraînable en rotation à une vitesse quelconque qui peut être constante ou non. Dans l'exemple illustré ci-après, l'arbre porteur de la poulie menante est entraîné en rotation à une vitesse constante (à confirmer par l'inventeur). L'arbre 3 porteur de la poulie 5 menée peut être formé par l'arbre d'entrée d'un boîtier de transmission logeant au moins partiellement l'arbre de sortie d'entraînement des roues de l'engin.

Un tel variateur de vitesse comprend encore un dispositif 7 de commande de variation de vitesse par commande manuelle en rapprochement/écartement des flasques de l'une des poulies et des moyens 6 de rappel des flasques 51, 52 de la poulie 5 menée en position rapprochée. Dans un tel variateur, la variation de vitesse est obtenue par variation du diamètre d'enroulement de la courroie 2 à l'intérieur des gorges de la poulie. A vitesse maximale, sur un tel variateur de vitesse, on observe un grand diamètre d'enroulement au niveau de la poulie 4 menante et un petit diamètre d'enroulement de la courroie au niveau de la poulie 5 menée. Le rapprochement ou l'écartement des flasques d'une poulie permet de faire varier le diamètre d'enroulement de la courroie autour de la poulie et par suite, la vitesse d'entraînement en rotation de l'arbre porteur des flasques de la poulie menée. Dans les exemples représentés, c'est la poulie 4 menante qui est la poulie commandée par le dispositif 7 de variation de vitesse.

Cette poulie 4 menante comporte un flasque 41 fixe monté solidaire en rotation de l'arbre 3 porteur de la poulie 4, par exemple par l'intermédiaire de cannelures, et un flasque 42, dit mobile, monté mobile dans le sens d'un rapprochement ou d'un écartement du flasque 41 à l'aide du dispositif 7 de commande de variation de vitesse qui comprend des moyens 71 de commande en rapprochement des flasques de la poulie menante par déplacement axial du flasque 42 le long dudit arbre. Ces moyens 71 de commande en rapprochement des flasques de la poulie menante à commande manuelle sont configurés pour permettre un déplacement axial d'au moins l'un des flasques, en l'occurrence le flasque 42 mobile, de la poulie menante le long de l'arbre porteur de la poulie menante, indépendamment de la vitesse de rotation de l'arbre porteur de ladite poulie menante. Ces moyens 71 de commande, dits à commande manuelle, peuvent comprendre un organe 711 de commande, tel qu'une fourchette actionnable manuellement par le conducteur de l'engin à l'aide par exemple d'une commande à came ou à tige, elle-même actionnée par l'opérateur à l'aide d'un levier ou d'une pédale. Les moyens 71 de commande comprennent donc un organe 711 de commande couplable à un levier, une manette ou une pédale 712 actionnable par la main ou le pied de l'opérateur, c'est pourquoi ils sont dits à commande manuelle. Cet organe 711 de commande, commandé ici par une pédale 712 à pied reliée par une tige audit organe 711 de commande, agit, dans l'exemple représenté, par poussée sur le flasque 42 via une pièce en forme de cloche 713 enfilée sur l'arbre porteur de la poulie menante et montée solidaire en rotation du flasque 42 mobile de la poulie menante, cette cloche 713 étant munie à son sommet d'un roulement 714 pour permettre l'action de l'organe 711 de commande sur le flasque 42 mobile relié à ladite cloche 713. Le dispositif 7 de commande comprend en outre des moyens 72 d'assistance à la commande. Ces moyens 72 d'assistance à la commande affectent la forme d'une came constituée de deux plateaux coaxiaux à rampe inclinée à contact glissant, l'un des plateaux, représenté en 721 aux figures, étant solidaire en rotation du flasque 42 mobile de la poulie menante, l'autre plateau, représenté en 722 aux figures, étant solidaire en rotation de l'arbre 3 porteur de la poulie. Un ressort 12 logé à l'intérieur de la cloche entre le plateau 722 solidaire en rotation de l'arbre et monté fixe axialement sur l'arbre et le sommet de la cloche rappelle les flasques 41, 42 de la poulie 4 menante en position écartée l'un de l'autre.

Généralement, le plateau 721 porte-rampe solidaire en rotation du flasque mobile est réalisé d'une seule pièce avec ledit flasque.

Ces plateaux 721, 722 tendent, lors de l'entraînement en rotation de la courroie, à s'écarter l'un de l'autre sous l'effet de ladite courroie. Cet écartement des plateaux 721, 722 entraîne un rapprochement des flasques 41, 42 de la poulie 4 menante. Cet effort axial généré sur les flasques dans le sens d'un rapprochement des flasques est proportionnel au couple transmis. La poulie menante est également une poulie débrayable. A cet effet, la poulie 4 menante comprend des moyens 43 de débrayage formés ici d'une pièce annulaire, en l'occurrence un roulement disposé entre les flasques 41, 42 pour le passage de la poulie 4 menante d'une position débrayée correspondant à la position dans laquelle les flasques 41, 42 de la poulie menante sont écartés l'un de l'autre et la courroie 2 vient en appui sur la surface périphérique externe de la pièce annulaire des moyens 43 de débrayage à une position embrayée dans laquelle les flasques 41, 42 sont rapprochés l'un de l'autre et empêchent tout contact d'appui de la courroie 2 avec la pièce annulaire des moyens 43 de débrayage.

Le rapprochement du flasque 42 du flasque 41 permet donc de commander le passage de la poulie de la position débrayée à la position de vitesse minimale, la vitesse augmentant au fur et à mesure du rapprochement des flasques. La poulie 5 menée est quant à elle formée ici d'un flasque 51, dit fixe, monté fixe axialement et solidaire en rotation de l'arbre 3 porteur de la poulie et d'un flasque 52 solidaire en rotation de l'arbre 3 et mobile axialement sur ledit arbre.

Dans les exemples représentés, le flasque 51, dit fixe, de la poulie 5 menée est réalisé d'une seule pièce avec un moyeu 55 enfilé sur l'arbre 3 porteur de la poulie 5, et monté solidaire en rotation dudit arbre 3. L'autre flasque 52, dit mobile, de la poulie 5 menée est évidé centralement et reçu à emboitement sur ledit moyeu 55 pour un montage libre axialement et solidaire en rotation dudit moyeu 55. De manière caractéristique à l'invention, le flasque 52 mobile est équipé d'un simple ressort 6 de rappel dudit flasque 52 en position rapprochée de l'autre flasque 51, ce ressort 6 de rappel formant les moyens de rappel des flasques 51, 52 de la poulie menée en position rapprochée.

Le flasque 51 fixe, de même que le moyeu 55, sont réalisés d'une seule pièce en matière de synthèse par exemple en polypropylène. Le flasque 51 fixe est muni sur sa surface, en regard du flasque mobile et servant à la délimitation de la gorge, d'un revêtement 56 en métal. Le flasque 52 mobile est quant à lui soit un flasque métallique, soit un flasque en matière de synthèse muni sur sa surface en regard du flasque fixe d'un revêtement en métal.

Dans les exemples représentés, le flasque fixe est réalisé d'une seule pièce avec le moyeu sur lequel le flasque mobile est monté mobile axialement et solidaire en rotation. Cette conception permet de limiter le nombre de pièces constitutives de la poulie. Plus précisément, le moyeu 55 est un corps creux, ouvert à l'une de ses extrémités pour pouvoir être enfilé sur un arbre porteur, ce corps étant muni à, ou au voisinage de, son extrémité ouverte du flasque 51 fixe se présentant sous forme d'une platine circulaire entourant ledit moyeu. Comme il est réalisé d'une seule pièce avec ledit moyeu, le flasque fixe est monté fixe axialement sur ledit moyeu.

Comme mentionné ci-dessus, ce flasque 51 fixe est muni d'un revêtement 56 en métal pour éviter une usure prématurée de l'ensemble. Dans les exemples représentés, ce revêtement 56 en métal du flasque fixe affecte la forme d'une coupelle 56 en métal évidée centralement pour pouvoir être enfilée sur ledit moyeu jusqu'à une position de fin de course dans laquelle ladite coupelle vient en contact d'appui et est maintenue à recouvrement de la surface du flasque fixe en regard du flasque mobile et servant à la délimitation de la gorge. De préférence, le revêtement en métal du flasque fixe est maintenu en contact d'appui sur ledit flasque fixe par sertissage. La coupelle constitutive du revêtement peut être de forme générale tronconique pour s'adapter à la forme de la surface du flasque fixe servant à la délimitation de la gorge qui peut également être une surface d'allure générale tronconique. Dans les exemples représentés, le moyeu 55 présente une forme périphérique externe polygonale, de préférence hexagonale, complémentaire de la forme de l'évidement central du flasque de l'évidement 53 central du flasque 52 mobile pour un montage solidaire en rotation du flasque et du moyeu. Le moyeu qui est un corps creux borgne ouvert à l'une de ses extrémités pour pouvoir être enfilé sur l'arbre 3 porteur présente à son autre extrémité un alésage axial à l'intérieur duquel est apte à se loger un organe 10 de fixation, tel qu'une vis, cet organe de fixation étant apte, en coopération avec une coupelle 11 interposée entre l'organe 10 de fixation et le flasque 52 mobile, à maintenir le flasque mobile sur ledit moyeu 55. Le flasque 52 mobile de la poulie 5 menée est quant à lui formé d'une platine circulaire évidée centralement. Ledit évidement 53 central est muni d'un rebord faisant saillie au moins d'un côté de ladite platine pour former un fût 58 coaxial à l'arbre 3 porteur de la poulie. Le ressort 6 de rappel du flasque 52 mobile en direction du flasque 51 fixe affecte la forme d'un ressort hélicoïdal enroulé autour dudit fût du flasque 52 mobile et de l'arbre 3 porteur. Le ressort est pris en sandwich entre le dos du flasque mobile et la coupelle 11 disposée à l'extrémité de l'arbre 3 porteur et fixée par l'intermédiaire d'un organe 10 de fixation au moyeu 55 du flasque 51 fixe. Le flasque 52 mobile est, dans les exemples représentés, un flasque en matière de synthèse, muni sur sa surface en regard de l'autre face, d'un revêtement en métal affectant la forme d'une coupelle évidée centralement. Les évidements centraux de la coupelle et du flasque permettent d'enfiler l'ensemble sur l'arbre 3 porteur. Comme pour le flasque 51 fixe, la coupelle constitutive du revêtement du flasque 52 mobile peut être de forme générale tronconique pour s'adapter à la forme de la surface du flasque qu'elle revêt qui peut être de forme générale tronconique. Chaque coupelle est, dans sa zone jouxtant l'évidement central séparé du flasque qu'elle revêt par un espace périphérique qui, en empêchant tout contact direct entre flasque et coupelle, réduit dans ladite zone les échanges thermiques entre flasque et coupelle. Cet espace périphérique est représenté en 57 aux figures.

La poulie 5 menée comporte encore un organe 8 fou. Cet organe 8 fou, formé ici par un roulement, est enfilé sur l'arbre de la poulie menée et est disposé entre les flasques 51, 52 de la poulie menée. Cet organe 8 fou présente une surface 82 périphérique externe circulaire contre laquelle la courroie 2 est partiellement en appui, en position d'écartement des flasques 51, 52 de la poulie 5 menée correspondant à la position de plus faible diamètre d'enroulement de la courroie autour dudit arbre et à la position de plus grande vitesse du variateur. Cette surface 82 périphérique externe est montée libre à rotation par rapport audit arbre 3.

Dans l'exemple représenté, comme l'organe 8 fou est un roulement, c'est la surface périphérique externe de la bague extérieure du roulement qui forme la surface 82 périphérique extérieure montée libre à rotation dudit organe fou. Cet organe 8 fou est immobilisé axialement sur l'arbre 3 porteur de la poulie 5 menée. Cette immobilisation axiale est obtenue via le moyeu 55 du flasque 51, dit fixe, de la poulie 5 menée. Ce moyeu 55 comporte un épaulement et un bourrelet entre lesquels l'organe 8 fou est encliqueté. Par ailleurs, le flasque 52 mobile de la poulie menée est muni, autour de son évidement 53 central, d'un logement 54 annulaire de l'organe 8 fou à l'état rapproché desdits flasques 51, 52.

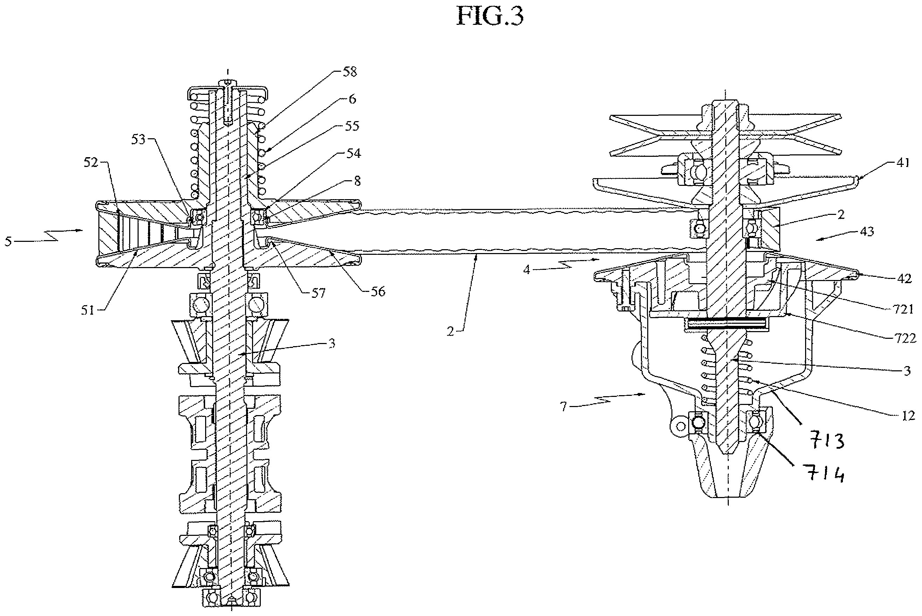

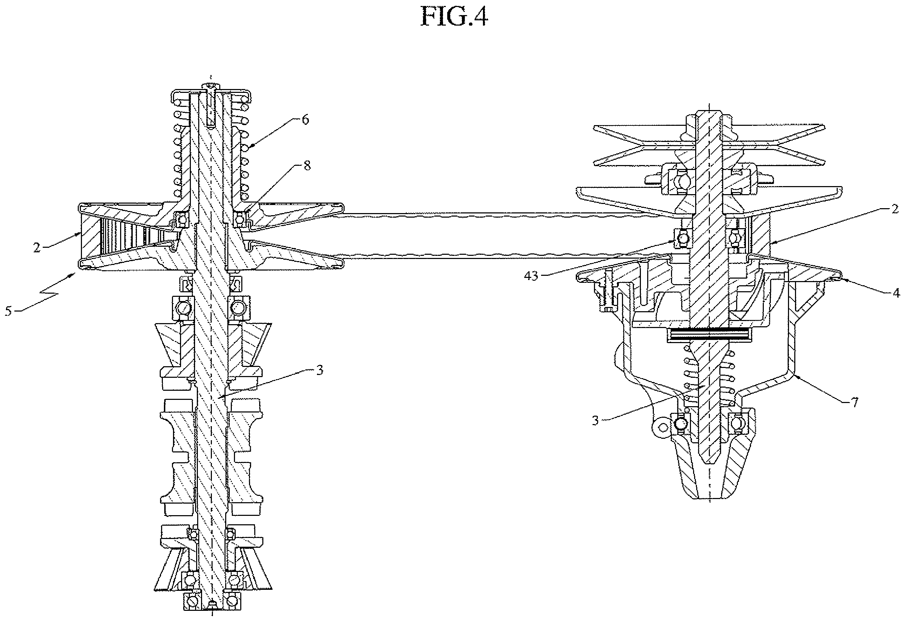

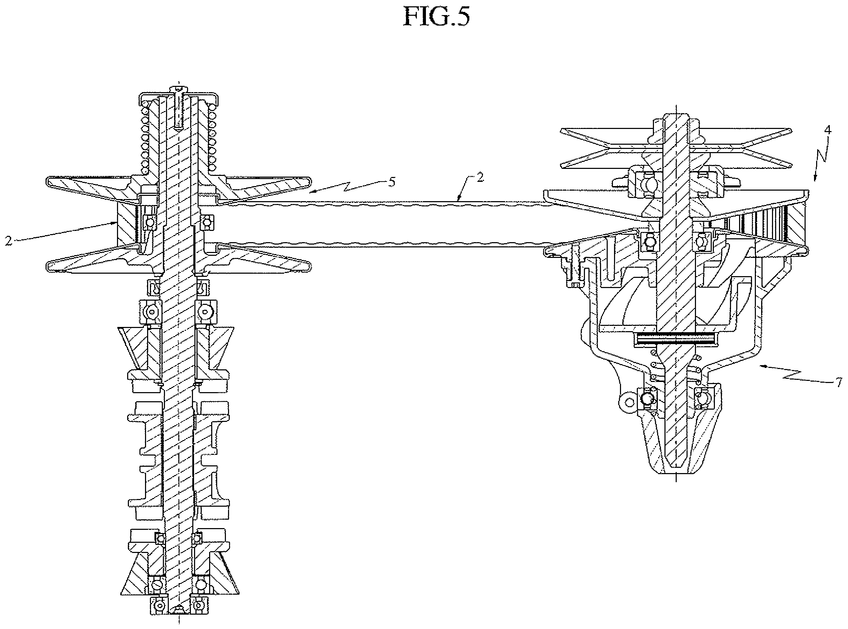

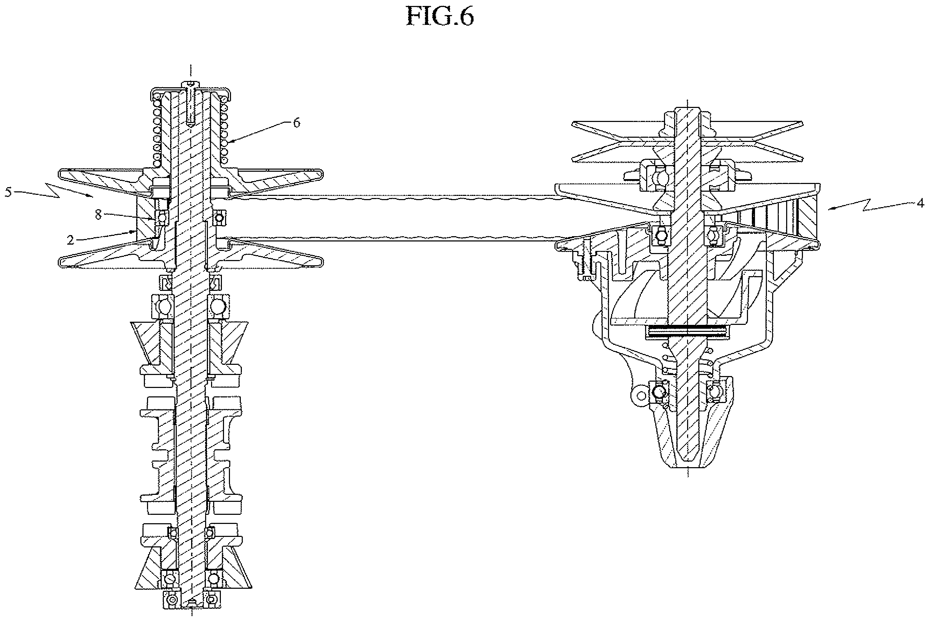

Le fonctionnement d'un tel variateur est le suivant. En l'absence de toute sollicitation, le variateur occupe une position conforme à la figure 3. Les flasques 41, 42 de la poulie 4 menante sont écartés l'un de l'autre. La courroie est en appui sur le roulement 43 de débrayage. Au niveau de la poulie 5 menée, les flasques sont rapprochés l'un de l'autre par le ressort 6 et la courroie est, dans la gorge de la poulie menée, en position de plus grand diamètre d'enroulement. L'organe 8 fou est escamoté dans le logement 54 annulaire du flasque 52 mobile de la poulie 5 menée. Lors d'un actionnement manuel du dispositif 7 de commande du variateur de vitesse, le flasque 42 de la poulie 4 menante est déplacé axialement le long de l'arbre 3 en direction du flasque 41 de la poulie menante. Au cours de ce rapprochement, le diamètre d'enroulement de la courroie croît et la courroie s'écarte du roulement 43 de débrayage pour occuper une position correspondant à la vitesse, dite minimale, du variateur de vitesse conforme à la figure 4. Lorsque le rapprochement des flasques 41, 42 de la poulie 4 menante se poursuit, le diamètre d'enroulement de la courroie dans la gorge de la poulie menante croît tandis que le diamètre d'enroulement de la courroie au niveau de la poulie menée se réduit jusqu'à obtention de la vitesse, dite maximale, du variateur représenté à la figure 5 où la courroie est proche du fond de la gorge. Dans cette position, le roulement 43 de débrayage est escamoté dans un logement annulaire du flasque 42 mobile de la poulie 4 menante. Si le couple résistant devient trop élevé sur l'arbre 3 porteur de la poulie 5 menée, la courroie tend à se rapprocher de l'organe 8 fou jusqu'à venir en contact avec la surface 82 périphérique externe dudit organe, comme l'illustre la figure 6. Dans cette position, la courroie, qui est une courroie trapézoïdale, patine contre les flasques 51, 52 de la poulie 5 menée. Dans cette position, un jeu est maintenu entre la coupelle 11 d'extrémité de l'arbre porteur de la poulie menée, cette coupelle formant une butée axiale du ressort 6 et l'extrémité libre du fût du flasque mobile de ladite poulie menée pour permettre le maintien d'une possibilité de déplacement axial du flasque 52 mobile de la poulie menée. Dès que le couple résistant appliqué sur l'arbre porteur de la poulie menée diminue et revient à une valeur autorisant, sous l'action du ressort 6, un écartement de la courroie de l'organe 8 fou, le variateur de vitesse revient en vitesse maximale. Le retour à la vitesse minimale du variateur de vitesse ou à la position débrayée s'opère par relâchement de la commande manuelle ou actionnement en sens inverse de ladite commande manuelle pour provoquer un écartement des flasques de la poulie 4 menante et, sous l'action du ressort 6, un rapprochement des flasques de la poulie menée.

## Revendications

1. Variateur (1) de vitesse à courroie (2) du type comprenant au moins :
- deux arbres (3) positionnables de manière sensiblement parallèles,
- deux poulies (4, 5) à flasques (41, 42 ; 51, 52) à écartement variable, l'une (4) menante, l'autre (5), menée, portées l'une (4), par l'un, l'autre (5), par l'autre desdits arbres (3) et reliées entre elles par ladite courroie (2),
- un dispositif (7) de variation de vitesse par commande en rapprochement/écartement des flasques (41, 42) de la poulie (4) menante
- des moyens (6) de rappel des flasques (51, 52) de ladite poulie (5) menée en position rapprochée,
**caractérisé en ce que** le dispositif (7) de variation de vitesse comprend des moyens (71) de commande en rapprochement des flasques (41, 42) de la poulie (4) menante à commande dite manuelle, et des moyens (72) d'assistance à la commande en rapprochement des flasques (41,42) de la poulie (4) menante à actionnement dit automatique, ces moyens (72) d'assistance comprenant une came formée de deux plateaux (721, 722) coaxiaux à rampes inclinées à contact glissant, l'un (721) des plateaux étant solidaire en rotation du ou d'un flasque (42) mobile de la poulie (4) menante, l'autre plateau (722) étant solidaire en rotation de l'arbre (3) porteur de la poulie (4) menante, lesdits plateaux tendant à s'écarter l'un de l'autre dans le sens d'un rapprochement des flasques (41,42) de la poulie (4) menante sous l'effet du couple transmis et **en ce que** les moyens (6) de rappel des flasques (51, 52) de ladite poulie (5) menée en position rapprochée sont formés par un simple ressort.

2. Variateur (1) selon la revendication 1,
**caractérisé en ce que** l'arbre (3) de la poulie (5) menée est équipé d'au moins une organe (8) fou, tel qu'un roulement, un galet ou une bague, présentant une surface (82) périphérique externe montée libre à rotation sur ledit arbre (3) et autour de laquelle la courroie (2) est apte à s'enrouler au moins partiellement en position écartée des flasques (51, 52) de la poulie (5) menée, correspondant à la position de plus faible diamètre d'enroulement de la courroie (2) autour dudit arbre (3).

3. Variateur (1) selon la revendication 2,
**caractérisé en ce que** l'organe (8) fou est immobilisé axialement sur l'arbre (3) porteur de la poulie (5) menée.

4. Variateur (1) selon l'une des revendications 2 ou 3,
**caractérisé en ce que** l'un (52) des flasques (51, 52) de la poulie (5) menée, évidé centralement pour pouvoir être enfilé sur l'arbre (3) porteur de ladite poulie (5), est muni, autour de l'évidement (53) central, d'un logement (54) annulaire de l'organe (8) fou, à l'état rapproché desdits flasques (51, 52).

5. Variateur (1) selon l'une des revendications 2 à 5,
**caractérisé en ce que**, en position de plus faible diamètre d'enroulement de la courroie (2) autour dudit arbre (3) de la poulie (5) menée, à l'état en appui de la courroie (2) sur la surface (82) périphérique externe de l'organe (8) fou, l'un (52) des flasques (51, 52) de la poulie (5) menée est monté avec jeu et déplaçable axialement le long dudit arbre (3) porteur de la poulie (5) menée dans le sens d'un écartement de l'autre flasque (51).

6. Variateur (1) selon la revendication 5,
**caractérisé en ce que** le flasque (52) de la poulie (5) menée monté avec jeu et déplaçable axialement le long dudit arbre (3) porteur de la poulie (5) menée, en position de plus faible diamètre d'enroulement de la courroie (2) autour dudit arbre (3) de la poulie (5) menée, à l'état en appui de la courroie (2) sur la surface (82) périphérique externe de l'organe (8) fou, est le flasque (52) chargé par ressort.

7. Variateur (1) selon l'une des revendications précédentes,
**caractérisé en ce que** l'un (51) des flasques, dit fixe, de la poulie (5) menée est réalisé d'une seule pièce avec un moyeu (55) enfilé sur l'arbre (3) porteur de la poulie (5), et monté solidaire en rotation dudit arbre (3), **en ce que** l'autre flasque (52), dit mobile, de la poulie (5) menée est évidé centralement et reçu à emboitement sur ledit moyeu (55) pour un montage libre axialement et solidaire en rotation dudit moyeu (55), **en ce que** le flasque (52) mobile est équipé du ressort (6) de rappel des flasques de la poulie menée en position rapprochée, **en ce que** lesdits flasques (51, 52) délimitent entre eux une gorge de dimension variable à l'intérieur de laquelle est apte à s'insérer la courroie (2) du variateur (1), **en ce qu'**au moins l'un (51) des flasques est un flasque en matière de synthèse muni, sur sa surface en regard de l'autre flasque, d'un revêtement en métal affectant la forme d'une coupelle (56) évidée centralement, et **en ce que** la coupelle (56) est, dans sa zone jouxtant l'évidement central, séparée du flasque qu'elle revêt par un espace (57) dit périphérique annulaire qui, en empêchant tout contact direct entre flasque (51) et coupelle (56) réduit, dans ladite zone, les échanges thermiques entre flasque (51) et coupelle (56), à l'état assemblé de la coupelle (56) au flasque (51).

8. Variateur (1) selon la revendication 7 prise en combinaison avec la revendication 4,
**caractérisé en ce que** le flasque (52) mobile de la poulie (5) menée est formé d'une platine circulaire évidée centralement, ledit évidement (53) central étant muni d'un rebord faisant saillie, au moins d'un côté, de ladite platine, pour former un fût (58) coaxial au moyeu (55) de la poulie (5), ledit rebord étant un rebord épaulé pour ménager le logement (54) annulaire de l'organe (8) fou à l'état rapproché desdits flasques (51, 52), le ressort (6) de rappel du flasque (52) mobile en direction du flasque (51) fixe affectant la forme d'un ressort hélicoïdal enroulé autour du fût (58) du flasque (52) mobile.

9. Variateur (1) selon l'une des revendications précédentes,
**caractérisé en ce que** la poulie (4) menante dont l'un (41) des flasques (41, 42), dit fixe, est monté solidaire en rotation de l'arbre (3) porteur de la poulie (4) menante et dont l'autre flasque (42), dit mobile, est monté mobile axialement sur l'arbre (3) porteur de la poulie (4) menante dans le sens d'un rapprochement du flasque (41) fixe par l'intermédiaire du dispositif (7) de variation de vitesse est une poulie débrayable et comprend des moyens (43) de débrayage formés d'au moins une pièce annulaire disposée entre lesdits flasques (41, 42), cette pièce annulaire présentant une surface périphérique externe, montée libre à rotation par rapport à l'arbre porteur de la poulie menante, et autour de laquelle la courroie (2) s'enroule au moins partiellement en position débrayée correspondant à la position dans laquelle les flasques (41, 42) sont écartés l'un de l'autre de manière à empêcher toute transmission de mouvement entre arbres porte-poulie, le flasque (42) mobile de la poulie (4) menante venant à recouvrement de la pièce annulaire au cours du rapprochement des flasques (41,42) de ladite poulie pour permettre l'enroulement de la courroie à l'intérieur de la gorge ménagée par les flasques et autoriser le passage du variateur de vitesse en position embrayée, la poursuite du rapprochement des flasques de la poulie (4) menante autorisant la variation à volonté de la vitesse.

10. Variateur (1) selon l'une des revendications précédentes,
**caractérisé en ce que** la poulie (4) menante est équipée de moyens (12) élastiques de rappel de ses flasques (41,42) en position écartée l'un de l'autre.

11. Variateur (1) selon l'une des revendications précédentes,
**caractérisé en ce que** les moyens (71) de commande en rapprochement des flasques (41, 42) de la poulie (4) menante à commande manuelle comprennent un organe (711) de commande couplable à un levier, une manette ou une pédale (714) actionnable par la main ou le pied de l'opérateur.

12. Variateur (1) de vitesse selon la revendication 11,
**caractérisé en ce que** la poulie (4) menante étant du type dont l'un des flasques (42) dit mobile est monté mobile axialement sur l'arbre (3) porteur de la poulie (4) menante dans le sens d'un rapprochement de l'autre flasque (41) de la poulie, l'organe (711) de commande des moyens (71) de commande en rapprochement des flasques de la poulie (4) menante à commande manuelle est actif par poussée directe ou indirecte sur ledit flasque (42).

13. Variateur (1) de vitesse selon la revendication 12,
**caractérisé en ce que**, lorsque l'organe (711) de commande des moyens (71) de commande en rapprochement des flasques de la poulie (4) menante est actif sur ledit flasque (42) mobile de la poulie (4) menante par poussée indirecte, ledit organe (711) de commande est actif par poussée via une pièce en forme de cloche (713) enfilée sur l'arbre porteur de la poulie (4) menante et monté solidaire en rotation dudit flasque (42) mobile de ladite poulie (4), cette cloche (713) étant munie à son sommet d'un roulement (714) sur lequel l'organe (711) de commande est apte à agir.

## Patentansprüche

1. Regelantrieb (1) mit Riemen (2) des Typs, der mindestens umfasst:
- zwei Wellen (3), die etwa parallel positionierbar sind,
- zwei Scheiben (4, 5) mit Flanschen (41, 42; 51, 52) mit variabler Beabstandung, von denen eine (4) führt und die andere (5) geführt wird, wobei eine (4) von einer Welle und die andere (5) von der anderen der Wellen (3) getragen wird und die miteinander durch den Riemen (2) verbunden sind,
- eine Geschwindigkeitsänderungsvorrichtung (7) durch Steuerung der Annäherung/Beabstandung der Flansche (41, 42) der führenden Scheibe (4),
- Rückstellmittel (6) der Flansche (51, 52) der geführten Scheibe (5) in angenäherte Position,
**dadurch gekennzeichnet, dass** die Geschwindigkeitsänderungsvorrichtung (7) Steuermittel (71) der Annäherung der Flansche (41, 42) der führenden Scheibe (4) mit manueller Steuerung und Assistenzmittel (72) der Steuerung der Annäherung der Flansche (41, 42) der führenden Scheibe (4) mit automatischer Betätigung umfasst, wobei diese Assistenzmittel (72) einen Nocken umfassen, der von zwei koaxialen Platten (721, 722) mit geneigten Rampen mit Gleitkontakt gebildet ist, wobei eine (721) der Platten mit dem oder einem beweglichen Flansch (42) der führenden Scheibe (4) rotierend fest verbunden ist, wobei die andere Platte (722) mit der tragenden Welle (3) der führenden Scheibe (4) rotierend fest verbunden ist, wobei die Platten dazu neigen, durch Annäherung der Flansche (41, 42) der führenden Scheibe (4) unter der Wirkung des übertragenen Moments voneinander zu beabstanden und dass die Rückstellmittel (6) der Flansche (51, 52) der geführten Scheibe (5) in angenäherter Position von einer einfachen Feder gebildet sind.

2. Antrieb (1) nach Anspruch 1,
**dadurch gekennzeichnet, dass** die Welle (3) der geführten Scheibe (5) mit mindestens einem beweglichen Organ (8) wie ein Lager, eine Rolle oder ein Ring, mit einer äußeren periphere Fläche (82) ausgestattet ist, das frei rotierend auf der Welle (3) montiert ist, und um welche sich der Riemen (2) mindestens teilweise in beabstandeter Position der Flansche (51, 52) der geführten Scheibe (5), die der Position mit dem geringsten Wickeldurchmesser des Riemens (2) um die Welle (3) entspricht, wickeln kann.

3. Regelantrieb (1) nach Anspruch 2,
**dadurch gekennzeichnet, dass** das bewegliche Organ (8) auf der Welle (3), die die geführte Scheibe (5) trägt, axial blockiert ist.

4. Antrieb (1) nach einem der Ansprüche 2 oder 3,
**dadurch gekennzeichnet, dass** einer (52) der Flansche (51, 52) der geführten Scheibe (5), der zentral hohl ist, um auf der Welle (3) aufgezogen sein zu können, die die Scheibe (5) trägt, um die zentrale Aushöhlung (53) mit einer ringförmigen Aufnahme (54) des beweglichen Organs (8) im angenäherten Zustand der Flansche (51, 52) ausgestattet ist.

5. Antrieb (1) nach einem der Ansprüche 2 bis 5,
**dadurch gekennzeichnet, dass** in der Position des kleinsten Wickeldurchmessers des Riemens (2) um die Welle (3) der geführten Scheibe (5) im Abstützzustand des Riemens (2) auf der äußeren periphere Fläche (82) des beweglichen Organs (8) einer (52) der Flansche (51, 52) der geführten Scheibe (5) mit einem Spiel und entlang der Welle (3), die die geführte Scheibe (5) trägt, in Richtung einer Beabstandung vom anderen Flansch (51) axial verlagerbar montiert ist.

6. Regelantrieb (1) nach Anspruch 5,
**dadurch gekennzeichnet, dass** der Flansch (52) der geführten Scheibe (5), der mit Spiel und entlang der Welle (3), die die geführte Scheibe (5) trägt, axial verlagerbar montiert ist, in Position des kleinsten Wickeldurchmessers des Riemens (2) um die Welle (3) der geführten Scheibe (5) im Abstützzustand des Riemens (2) auf der äußeren periphere Fläche (82) des beweglichen Organs (8) der durch Feder gespannte Flansch (52) ist.

7. Antrieb (1) nach einem der vorangehenden Ansprüche,
**dadurch gekennzeichnet, dass** einer (51) der Flansche, der als fest bezeichnete, der geführten Scheibe (5) aus einem einzigen Teil mit einer Nabe (55) hergestellt ist, die auf die Welle (3), welche die Scheibe (5) trägt, aufgezogen ist, und auf der Welle (3) rotierend fest verbunden ist, dass der andere Flansch (52), der als beweglich bezeichnete, der geführten Scheibe (5) zentral ausgehöhlt ist und auf der Nabe (55) für eine axial freie und mit der Nabe (55) rotierend fest verbundene Montage rastet, dass der bewegliche Flansch (52) mit der Rückstellfeder (6) der Flansche der geführten Scheibe in angenäherte Position ausgestattet ist, dass die Flansche (51, 52) zwischen sich eine Nut mit variabler Größe begrenzen, in welche sich der Riemen (2) des Regelantriebs (1) einfügen kann, dass mindestens einer (51) der Flansche ein Flansch aus synthetischem Material ist, der auf seiner Fläche, die dem anderen Flansch zugewandt ist, mit einer Metallbeschichtung ausgestattet ist, die die Form einer zentral ausgehöhlten Schale (56) hat, und dass die Schale (56) in ihrer Zone neben der zentralen Aushöhlung, getrennt vom Flansch, den sie bedeckt, durch einen ringförmigen peripheren Raum (57) getrennt ist, der, indem er jeden direkten Kontakt zwischen Flansch (51) und Schale (56) verhindert, in der Zone im montierten Zustand der Schale (56) auf dem Flansch (51) Wärmeaustausch zwischen Flansch (51) und Schale (56) verhindert.

8. Regelantrieb (1) nach Anspruch 7, herangezogen in Kombination mit Anspruch 4,
**dadurch gekennzeichnet, dass** der bewegliche Flansch (52) der geführten Scheibe (5) von einer zentral ausgehöhlten kreisrunden Platine gebildet ist, wobei die zentrale Aushöhlung (53) mindestens auf einer Seite der Platine mit einer hervorstehenden Kante ausgestattet ist, um einen zur Nabe (55) der Scheibe (5) koaxialen Schacht (58) zu bilden, wobei die Kante eine Kante mit Absatz ist, um die ringförmige Aufnahme (54) des beweglichen Organs (8) im angenäherten Zustand der Flansche (51, 52) freizuhalten, wobei die Rückstellfeder (6) des in Richtung des festen Flanschs (51) beweglichen Flanschs (52) die Form einer Spiralfeder hat, die um den Schacht (58) des beweglichen Flanschs (52) gewickelt ist.

9. Regelantrieb (1) nach einem der vorangehenden Ansprüche,
**dadurch gekennzeichnet, dass** die führende Scheibe (4), von der einer (41) der Flansche (41, 42), der als fest bezeichnete, mit der Welle (3), die die führende Scheibe (4) trägt, rotierend fest verbunden ist, und deren anderer Flansch (42), der als beweglich bezeichnete, auf der Welle (3), die die führende Scheibe (4) trägt, in Richtung einer Annäherung des festen Flanschs (41) mittels der Geschwindigkeitsänderungsvorrichtung (7) axial beweglich montiert ist, eine ausrückbare Scheibe ist und Ausrückmittel (43) umfasst, die von mindestens einem ringförmigen Teil gebildet sind, das zwischen den Flanschen (41, 42) angeordnet ist, wobei dieses ringförmige Teil, das eine äußere periphere Fläche aufweist, in Bezug zu der Welle, die die führende Scheibe trägt, frei rotierend montiert ist, und um das sich der Riemen (2) mindestens teilweise in ausgerückter Position wickelt, die der Position entspricht, in welcher die Flansche (41, 42) derart voneinander beabstandet sind, dass jede Bewegungsübertragung zwischen den scheibentragenden Wellen verhindert wird, wobei der bewegliche Flansch (42) der führenden Scheibe (4) das ringförmige Teil während der Annäherung der Flansche (41, 42) der Scheibe bedeckt, um das Wickeln des Riemens in der Nut zu erlauben, die von den Flanschen freigehalten wird, und um den Wechsel des Regelantriebs in die eingerückte Position zu erlauben, wobei die Fortsetzung der Annäherung der Flansche der führenden Scheibe (4) die Änderung der Geschwindigkeit nach Wunsch erlaubt.

10. Regelantrieb (1) nach einem der vorangehenden Ansprüche,
**dadurch gekennzeichnet, dass** die führende Scheibe (4) mit elastischen Rückstellmitteln (12) ihrer Flansche (41, 42) in voneinander beabstandete Position ausgestattet ist.

11. Regelantrieb (1) nach einem der vorangehenden Ansprüche,
**dadurch gekennzeichnet, dass** die Steuermittel (71) der Annäherung der Flansche (41, 42) der führenden Scheibe (4) mit manueller Steuerung ein an einen Hebel, einen Griff oder ein Pedal (714), betätigbar mit der Hand oder dem Fuß des Bedieners, gekoppeltes Steuerorgan (711) umfassen.

12. Regelantrieb (1) nach Anspruch 11,
**dadurch gekennzeichnet, dass** die führende Scheibe (4) des Typs ist, von dem einer der Flansche (42), als beweglich bezeichnet, auf der Welle (3), die die führende Scheibe (4) trägt, in Richtung einer Annäherung an den anderen Flansch (41) der Scheibe axial beweglich montiert ist, wobei das Steuerorgan (711) der Steuermittel (71) der Annäherung der Flansche der führenden Scheibe (4) mit manueller Steuerung durch direkten oder indirekten Druck auf den Flansch (42) aktiv ist.

13. Regelantrieb (1) nach Anspruch 12,
**dadurch gekennzeichnet, dass**, wenn das Steuerorgan (711) der Steuermittel (71) der Annäherung der Flansche der führenden Scheibe (4) auf den beweglichen Flansch (42) der führenden Scheibe (4) durch indirekten Druck aktiv ist, das Steuerorgan (711) durch Druck über ein glockenförmiges Teil (713) aktiv ist, das auf der Welle, die die führende Scheibe (4) trägt, aufgezogen und mit dem beweglichen Flansch (42) der Scheibe (4) rotierend fest verbunden montiert ist, wobei diese Glocke (713) an ihrer Spitze mit einem Lager (714) ausgestattet ist, auf das das Steuerorgan (711) imstande ist, einzuwirken.

## Claims

1. A continuously variable belt (2) transmission (1) of the type comprising at least:
- two shafts (3) able to be positioned in a substantially parallel manner,
- two pulleys (4, 5) with flanges (41, 42; 51, 52) with a variable separation, one (4) driving, the other (5) driven, one carried by one (4), the other (5) by the other, of said shafts (3) and connected to one another by said belt (2),
- a speed varying device (7) controlled by the flanges (41, 42) of the driving pulley (4) being brought together or spaced apart,
- means (6) for returning the flanges (51, 52) of said driven pulley (5) to the close together position,
**characterized in that** the speed varying device (7) comprises means (71) for controlling bringing the flanges (41, 42) of the driving pulley (4) closer together with so-called manual control, and means (72) to assist with the command to bring the flanges (41, 42) of the driving pulley (4) closer together with so-called automatic actuation, these assistance means (72) comprising a cam made up of two coaxial plates (721, 722) with inclined ramps with sliding contact, one (721) of the plates being secured in rotation with the or a moving flange (42) of the driving pulley (4), the other plate (722) being secured in rotation with the shaft (3) carrying the driving pulley (4), said plates tending to move away from one another in the direction bringing the flanges (41, 42) of the driving pulley (4) closer together under the effect of the transmitted torque and **in that** the return means (6) returning the flanges (51, 52) of said driven pulley (5) into the close together position are formed by a single spring.

2. The variable transmission (1) according to claim 1,
**characterized in that** the shaft (3) of the driven pulley (5) is equipped with at least one idler (8), such as a rolling bearing, a roller or a ring, having an outer peripheral surface (82) mounted freely rotating on said shaft (3) and around which the belt (2) is able to wind itself at least partially in the separated position of the flanges (51, 52) of the driven pulley (5), corresponding to the position with the smallest winding diameter of the belt (2) around said shaft (3).

3. The variable transmission (1) according to claim 2,
**characterized in that** the idler (8) is axially immobilized on the shaft (3) carrying the driven pulley (5).

4. The variable transmission (1) according to one of claims 2 or 3,
**characterized in that** one (52) of the flanges (51, 52) of the driven pulley (5), centrally hollowed out to be able to be slipped on the shaft (3) carrying said pulley (5), is provided, around the central recess (53), with an annular housing (54) of the idler (8), in the close together state of said flanges (51, 52).

5. The variable transmission (1) according to one of claims 2 to 5,
**characterized in that**, in the position with the smallest winding diameter of the belt (2) around said shaft (3) of the driven pulley (5), in the state of the belt (2) bearing on the outer peripheral surface (82) of the idler (8), one (52) of the flanges (51, 52) of the driven pulley (5) is mounted with play and axially movable along said shaft (3) carrying the driven pulley (5) in the direction moving away from the other flange (51).

6. The variable transmission (1) according to claim 5,
**characterized in that** the flange (52) of the driven pulley (5) mounted with play and axially movable along said shaft (3) carrying the driven pulley (5), in the position with the smallest winding diameter of the belt (2) around said shaft (3) of the driven pulley (5), in the state of the belt (2) bearing on the outer peripheral surface (82) of the idler (8), is the springloaded flange (52).

7. The variable transmission (1) according to one of the preceding claims,
**characterized in that** one (51) of the flanges, called fixed, of the driven pulley (5) is made in a single piece with a hub (55) slipped on the shaft (3) carrying the pulley (5), and mounted secured in rotation with said shaft (3), **in that** the other flange (52), called moving, of the driven pulley (5) is centrally hollowed out and received by nesting on said hub (55) for axially free mounting and secured in rotation with said hub (55), **in that** the moving flange (52) is equipped with the return spring (6) for returning the flanges of the driven pulley to the close together position, **in that** said flanges (51, 52) define, between them, a groove of variable size inside which the belt (2) of the variable transmission (1) can be inserted, **in that** at least one (51) of the flanges is a flange made from a synthetic material provided, on its surface across from the other flange, with a metal coating assuming the form of a centrally hollowed out cup (56), and **in that** the cup (56) is, in its area adjacent to the central recess, separated from the flange that it covers by a so-called annular peripheral space (57), which, by preventing any direct contact between the flange (51) and the cup (56), reduces, in said area, heat exchanges between the flange (51) and the cup (56), in the state of the cup (56) assembled to the flange (51).

8. The variable transmission (1) according to claim 7 combined with claim 4,
**characterized in that** the moving flange (52) of the driven pulley (5) is formed by a centrally hollowed out platen, said central hollow (53) being provided with a rim protruding, at least on one side, from said platen, to form a pillar (58) coaxial to the hub (55) of the pulley (5), said rim being a shouldered rim to arrange the annular housing (54) of the idler (8) in the close together state of said flanges (51, 52), the return spring (6) returning the moving flange (52) toward the fixed flange (51) assuming the form of a helical spring wound around the pillar (58) of the moving flange (52).

9. The variable transmission (1) according to one of the preceding claims,
**characterized in that** the driving pulley (4), one (41) of the flanges (41, 42) of which, called fixed, is mounted secured in rotation with the shaft (3) carrying the driving pulley (4), and the other flange (42) of which, called moving, is mounted axially moving on the shaft (3) carrying the driving pulley (4) in the direction bringing the fixed flange (41) closer via the speed varying device (7) is a disengageable pulley and comprises disengaging means (43) formed by at least one annular part arranged between said flanges (41, 42), this annular part having an outer peripheral surface, mounted freely rotating with respect to the shaft carrying the driving pulley, and around which the belt (2) winds at least partially in the disengaged position corresponding to the position in which the flanges (41, 42) are separated from one another so as to prevent any transmission of movement between pulley-carrying shafts, the moving flange (42) of the driving pulley (4) overlapping the annular part when the flanges (41, 42) of said pulley are brought closer together to allow winding of the belt inside the groove arranged by the flanges and to allow the speed varying member to enter the engaged position, the continued bringing together of the flanges of the pulley (4) allowing the speed to be varied at will.

10. The variable transmission (1) according to one of the preceding claims,
**characterized in that** the driving pulley (4) is equipped with elastic return means (12) for returning its flanges (41, 42) to the position separated from one another.

11. The variable transmission (1) according to one of the preceding claims,
**characterized in that** the manually controlled means (71) to control bringing the flanges (41, 42) of the driving pulley (4) closer together comprise a control member (711) able to be coupled to a lever, a control stick or a pedal (714) able to be actuated by the operator's hand or foot.

12. The variable transmission (1) according to claim 11,
**characterized in that** the driving pulley (4) is of the type whereof one of the flanges (42), called moving, is mounted axially moving on the shaft (3) carrying the driving pulley (4) in the direction coming closer to the other flange (41) of the pulley, the control member (711) of the manually controlled means (71) for controlling bringing the flanges of the driving pulley (4) closer together is active by a direct or indirect thrust on said flange (42).

13. The variable transmission (1) according to claim 12,
**characterized in that**, when the control member (711) of the means (71) for controlling bringing the flanges of the driving pulley (4) closer together is active on said moving flange (42) of the driving pulley (4) by indirect thrust, said control member (711) is active by thrust via a bell-forming part (713) slipped on the shaft carrying the driving pulley (4) and mounted secured in rotation with said moving flange (42) of said pulley (4), this bell (713) being provided at its apex with a rolling bearing (714) on which the control member (711) is able to act.
